# DEMANDE DE BREVET EUROPEEN

(11) **EP 1 577 197 A2**
(43) Date de publication de la demande: **21.09.2005**
(21) Numéro de dépôt: 05300157.4
(22) Date de dépôt: 01.03.2005
(51) Int. Cl.: B62D 43/04

(54) **Véhicule automobile comportant une roue de secours mue par un treuil**

(30) Priorité: 16.03.2004 FR 0402677
(71) Demandeur: Renault s.a.s., 92100 Boulogne Billancourt (FR)
(72) Inventeur: Laporte-Galaa, Philippe, 75014 Paris (FR); Leung, Jean, 94170 Le Perreux sur Marne (FR); Mai, Tran Vu, 78200 Mantes la Jolie (FR); Martz, Philippe, 78990 Elancourt (FR)

(57) **Abrégé**

L'invention propose un véhicule automobile dont un panneau (12) horizontal inférieur de fond d'un compartiment à bagages, délimite sous le véhicule un logement (14) destiné à recevoir une roue (16) de secours, du type dans lequel la roue (16) est fixée à un élément (20) d'accrochage mu par un dispositif (10) de manoeuvre qui est fixé à un câble (24) qui est susceptible d'être actionné depuis l'intérieur de la caisse entre une position rétractée du câble permettant le maintien de la roue (16) et au moins une première position étendue du câble permettant de déposer la roue (16) sur le sol, caractérisé en ce que le dispositif de manoeuvre est constitué d'un treuil (10) actionné par un organe (38) d'entrée du treuil (10) selon un rapport de démultiplication qui est progressivement variable à mesure du déroulement du câble.

## Description

L'invention concerne un véhicule automobile comportant une roue de secours.

L'invention concerne plus particulièrement un véhicule automobile, du type qui comporte une caisse dont au moins un panneau horizontal inférieur, notamment un panneau de fond d'un compartiment à bagages, délimite sous le véhicule un logement destiné à recevoir une roue de secours du véhicule, du type dans lequel la roue est fixée à un élément d'accrochage qui est fixé à une première extrémité d'un câble qui est susceptible d'être actionné depuis l'intérieur de la caisse par l'intermédiaire d'un dispositif de manoeuvre successivement entre une position rétractée dans laquelle il maintient la roue de secours plaquée dans son logement contre le panneau horizontal inférieur, une première position intermédiaire étendue dans laquelle il permet l'extraction de la roue de secours hors du logement puis sa descente jusqu'au sol sur lequel repose le véhicule, et une seconde position étendue dans laquelle le câble est déployé au maximum de manière que la roue puisse être tirée en arrière du véhicule pour son utilisation.

On connaît de nombreux exemples de véhicules automobiles de ce type.

Le document FR-2.833.236 décrit et représente un tel véhicule dont le câble comporte une deuxième extrémité opposée qui est reliée à une poignée d'actionnement. La roue de secours peut être remontée sous le panneau horizontal inférieur en tirant sur le câble par l'intermédiaire de la poignée, puis verrouillée dans cette position en vissant une vis traversant une platine solidaire de la roue.

Cette conception permet à un utilisateur d'éviter d'avoir à déverrouiller un panier de maintien de la roue de secours, mais elle nécessite un effort important de sa part sur la poignée pour remonter ladite roue de secours.

Par ailleurs, cette conception n'offre qu'un avantage limité puisqu'elle impose de verrouiller la roue de manière conventionnelle à l'aide d'un écrou, ce qui constitue une manoeuvre longue et fastidieuse.

L'invention remédie à ces inconvénients en proposant un dispositif de manoeuvre démultiplié de manière variable, qui est facile à manipuler et qui propose des moyens de verrouillage intégrés.

Dans ce but l'invention propose un véhicule du type décrit précédemment, caractérisé en ce que le dispositif de manoeuvre est constitué d'un treuil qui est susceptible de transformer un mouvement de rotation d'un organe d'entrée du treuil en un mouvement de translation du câble selon un rapport de démultiplication qui est progressivement variable à mesure du déroulement du câble entre une valeur réduite, associée à la position rétractée du câble, et une valeur élevée associée au moins à la première position étendue du câble.

Selon d'autres caractéristiques de l'invention :
- le treuil comporte au moins, d'amont en aval, un arbre primaire, qui est solidaire en rotation de l'organe d'entrée, dont un filetage sans fin engrène avec une première roue dentée d'axe horizontal qui est liée en rotation à une poulie tronconique coaxiale qui comporte une gorge en spirale dans laquelle est enroulé le câble, la poulie tronconique étant accolée à la première roue dentée par son extrémité de plus grand diamètre et une seconde extrémité du câble étant fixé sur la périphérie de l'extrémité de plus grand diamètre de la poulie, pour proposer le rapport de démultiplication variable à mesure du déroulement du câble.
- le treuil comporte de surcroît :
   - une seconde roue dentée qui est liée en rotation à l'extrémité de plus petit diamètre de la poulie tronconique,
   - un guide tubulaire vertical qui est agencé selon une direction tangente à la seconde roue dentée, dont une extrémité est agencée verticalement à une distance déterminée d'un axe parallèle à l'axe commun des roues et de la poulie et tangent à la seconde roue dentée, et qui est destiné à permettre le passage du câble,
   - une partie de l'élément d'accrochage, comportant une série de gorges réparties à intervalles réguliers, qui est susceptible de traverser le guide dans la position rétractée du câble afin qu'un tronçon inférieur de la partie filetée soit maintenu dans le guide et qu'un tronçon supérieur de la partie munie de gorges fasse saillie hors du guide suivant la distance déterminée en abordant tangentiellement puis en engrenant avec la seconde roue dentée, pour verrouiller l'élément d'accrochage dans la position rétractée du câble,
- le treuil comporte une platine de support qui comporte deux paliers portant l'axe commun des roues dentées et de la poulie, qui porte le guide, et qui est fixée, notamment par vissage, au panneau horizontal inférieur de la caisse du véhicule,
- la platine de support est fixée sur le panneau horizontal inférieur de la caisse du véhicule,
- la platine de support est fixée sous le panneau horizontal inférieur de la caisse du véhicule,
- le treuil comporte un dispositif de limitation de couple qui est logé dans la poulie tronconique et qui est interposé mécaniquement entre la première roue dentée et la poulie tronconique,
- l'extrémité libre de l'arbre primaire comporte un embout formant l'organe d'entrée qui est susceptible de coopérer avec une manivelle amovible,
- la manivelle est une manivelle d'un cric du véhicule,
- la manivelle est une manivelle spécifique associée au treuil,
- la manivelle est d'une longueur destinée à permettre la manoeuvre de l'embout sans ôter des bagages du compartiment à bagages,
- l'élément d'accrochage est réalisé en deux parties et il comporte :
   - à l'extrémité inférieure de sa partie munie de gorges, une tête en forme de champignon,
   - une plaque de maintien de la roue de secours, dans une boutonnière de laquelle la tête de l'élément d'accrochage est sertie,
- la roue de secours comporte un perçage central par lequel est introduit d'un côté la tête de l'élément d'accrochage et la plaque de maintien, ladite plaque de maintien étant d'un encombrement supérieur au diamètre dudit perçage central de le roue pour éviter le vol de la roue de secours.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un treuil pour un véhicule automobile réalisé conformément à l'invention ;
- la figure 2 est une vue en coupe transversale d'un panneau horizontal inférieur sous lequel est fixé le treuil de la figure 1, représenté dans une position rétractée du câble associée au maintien de la roue de secours dans son logement sous le panneau horizontal inférieur ;
- la figure 3 est une vue en coupe transversale d'un panneau horizontal inférieur sous lequel est fixé le treuil de la figure 1, représenté dans une première position étendue du câble associée à la descente de la roue de secours sur le sol;
- la figure 4 est une vue en coupe transversale d'un panneau horizontal inférieur sur lequel est fixé un treuil en variante de l'invention, représenté dans une position rétractée du câble associée au maintien de la roue de secours dans son logement sous le panneau horizontal inférieur,
- la figure 5 est une vue partielle de côté de l'arrière du véhicule comportant le treuil dans la seconde position étendue du câble ;
- la figure 6 est une vue de l'arrière d'un véhicule représentant un mode de réalisation préféré de la manivelle.

Dans la description qui va suivre, des chiffres de référence identiques désignent des pièces identiques ou ayant des fonctions similaires.

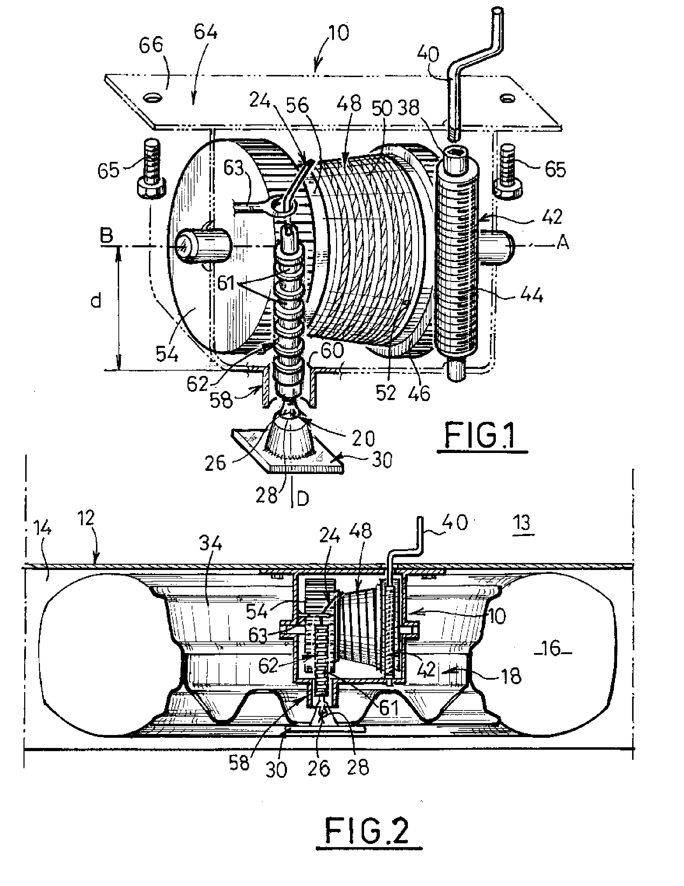

On a représenté aux figures 1 à 6 un dispositif 10 de manoeuvre destiné à équiper un véhicule 11 automobile.

De manière connue, un véhicule automobile comporte une caisse dont au moins un panneau 12 horizontal inférieur, notamment un panneau de fond d'un compartiment 13 à bagages, délimite sous le véhicule un logement 14 destiné à recevoir une roue 16 de secours du véhicule.

De manière connue, la roue 16 comporte une jante 18 qui est fixée à un élément 20 d'accrochage qui est fixé à une première extrémité 22 d'un câble 24 qui est susceptible d'être actionné depuis l'intérieur de la caisse par l'intermédiaire du dispositif 10 de manoeuvre.

Plus particulièrement, l'élément 20 d'accrochage est réalisé en deux parties et il comporte par exemple une tête 26 en forme de champignon qui est sertie dans une boutonnière 28 d'une plaque de maintien 30 de la roue 16 de manière à former une rotule permettant l'articulation de la plaque 30 par rapport à l'élément 20. Pour fixer la roue 16 à l'élément d'accrochage 20, l'élément 20 d'accrochage porteur de la plaque 30, inclinée de manière à être plaquée contre l'élément 20, est préalablement introduit d'un côté 32 de la jante 18 à travers un perçage central de la jante 18. Puis la plaque 30 est redressée sensiblement à la perpendiculaire de l'élément 20 de manière que la jante 18 soit en appui sur ladite plaque 30.

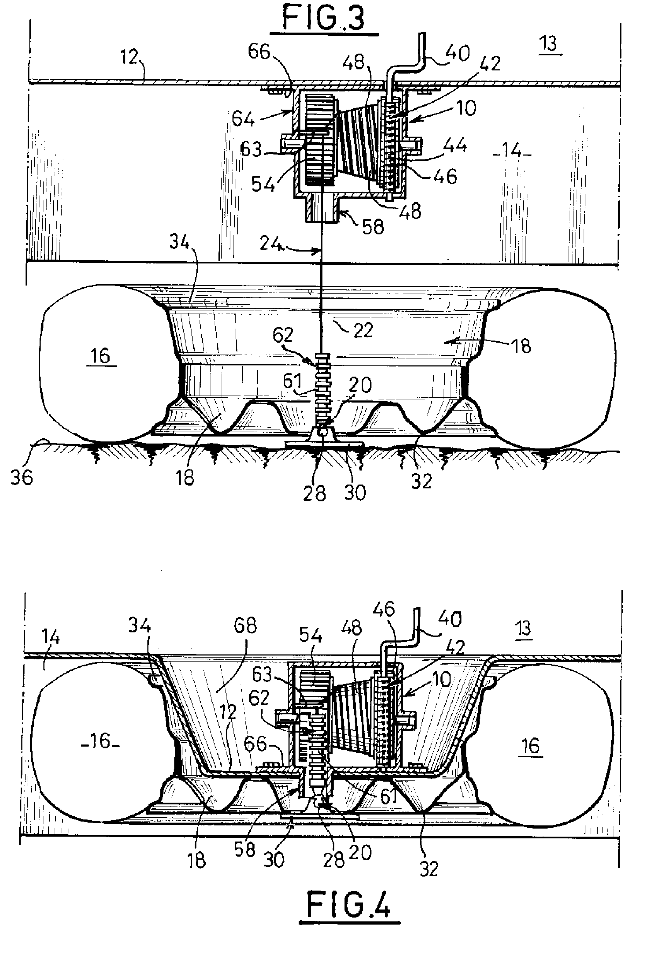

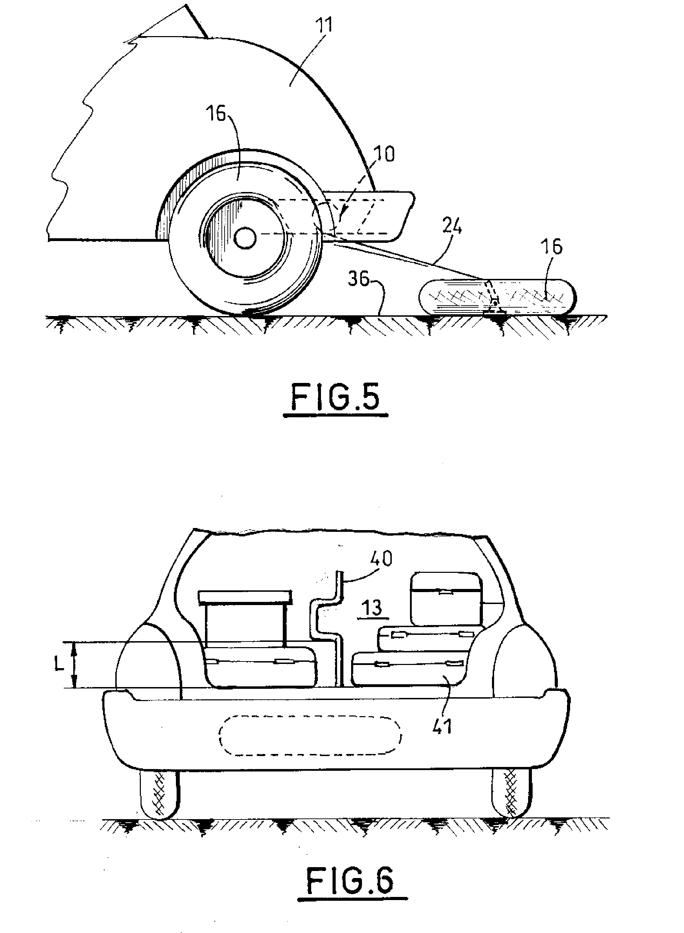

A cet effet, il sera compris que la plaque 30 est d'un encombrement supérieur au diamètre du perçage pour permettre le maintien de la roue 16 du côté opposé et éviter le vol de la roue de secours. Le dispositif 10 de manoeuvre est ainsi mobile entre :
- une position rétractée du câble 24, représentée à la figure 2, dans laquelle il maintient la roue 16 de secours plaquée dans son logement 14 contre le panneau 12 horizontal inférieur,
- une première position intermédiaire étendue du câble 24, représentée à la figure 3, dans laquelle il permet l'extraction de la roue 16 de secours hors du logement 14 puis sa descente jusqu'au sol 36 sur lequel repose le véhicule,
- une seconde position étendue du câble 24, représentée à la figure 5, dans laquelle il est déployé au maximum de manière que la roue 16 puisse être tirée sur le sol 36 en arrière du véhicule pour permettre son utilisation.

Conventionnellement, un tel dispositif 10 de manoeuvre est constitué d'une simple poignée (non représentée) qui est attachée à l'extrémité du câble 24 qui est opposée à l'élément d'accrochage 20. Cette poignée exige un effort important de la part d'une personne désireuse de relâcher le câble 24 pour descendre la roue 16 sans la laisser tomber brutalement, et elle exige un effort encore plus important de la part de cette même personne lorsqu'elle désire remonter la roue 16 dans son logement 14, la personne devant alors surmonter le poids de la roue 16 qui est transmis au câble 24. L'effort à fournir est encore plus important si la roue est remontée à partir de sa position de la figure 5. L'utilisateur doit tirer la roue 16 sur le sol 36 avant de la remonter.

Pour remédier à cet inconvénient, le dispositif de manoeuvre selon l'invention est constitué d'un treuil 10 qui est susceptible de transformer un mouvement de rotation d'un organe 38 d'entrée du treuil 10 en un mouvement de translation du câble 24 selon un rapport de démultiplication qui est progressivement variable à mesure du déroulement du câble 24 entre une valeur réduite, associée à la position rétractée du câble 24 représentée à la figure 2, et une valeur élevée associée au moins à la première position étendue du câble 24 qui a été représentée à la figure 2.

L'organe d'entrée du treuil 10 est notamment constitué d'un embout 38, notamment carré, qui est susceptible de coopérer avec un embout complémentaire d'une manivelle 40 amovible, de manière à permettre sélectivement l'entraînement de l'embout carré 38 ou bien le démontage et le rangement de la manivelle 40.

Avantageusement, selon un premier mode de réalisation de la manivelle 40 peut être une manivelle d'un cric du véhicule.

Toutefois, selon un second mode de réalisation préféré de la manivelle, la manivelle est une manivelle spécifique associée au treuil 10.

Par exemple, comme l'illustre la figure 6, la manivelle 40 est d'une longueur "L" destinée à permettre la manoeuvre de l'embout 38 sans ôter tous les bagages 41 du compartiment 13 à bagages du véhicule.

Comme l'illustre la figure 1, le treuil 10 comporte au moins, d'amont en aval, un arbre primaire 42, dont l'extrémité libre est solidaire en rotation de l'embout formant l'organe d'entrée 38 et dont un filetage 44 sans fin engrène avec une première roue dentée 46 d'axe "A" horizontal. Cette première roue dentée 46 d'axe "A" horizontal est liée en rotation à une poulie 48 tronconique coaxiale qui comporte une gorge 50 en spirale dans laquelle est enroulé le câble 24.

Par ailleurs, la poulie tronconique 48 est accolée à la première roue dentée 46 par son extrémité 52 de plus grand diamètre et une seconde extrémité (non représentée) du câble 24 est fixée sur la périphérie de l'extrémité 52 de plus grand diamètre de la poulie 48, pour qu'il soit à même de se dérouler ou s'enrouler selon le rapport de démultiplication variable.

En effet, dans cette configuration, à mesure qu'il se dévide, le câble 24 se déroule à partir d'un périmètre croissant de la poulie. De la sorte, le câble 24 se déroule d'abord à vitesse réduite en début de course puis à vitesse élevée en fin de course.

Inversement, lors de la remontée de la roue 16 de secours, pour un couple donné exercé par l'utilisateur sur la manivelle 40, le câble 24 s'enroule d'abord autour de la poulie tronconique 48 en début de course, puis s'enroule en fin de course autour de la poulie 48 à vitesse réduite mais avec un couple élevé.

Avantageusement, le treuil 10 comporte un dispositif (non représenté) de limitation de couple qui est logé dans la poulie tronconique 48 et qui est interposé mécaniquement entre la première roue dentée 46 et la poulie tronconique 48. Cette configuration permet d'éviter une traction trop importante sur le câble 24 en fin de remontée de la roue 16, c'est à dire dans sa position rétractée.

Par ailleurs, le treuil 10 comporte de surcroît une seconde roue dentée 54 qui est liée en rotation à l'extrémité 56 de plus petit diamètre de la poulie tronconique. Un guide tubulaire vertical 58 est agencé selon une direction "D" tangente à la seconde roue 54 dentée. Une extrémité 60 de ce guide 58 est agencée verticalement à une distance déterminée "d" d'un axe "B" parallèle à l'axe "A" commun des roues 46, 54 et de la poulie 48 et tangent à la roue 54.

Le guide 58 est destiné à permettre le passage du câble 24, mais il est aussi destiné à permettre à une partie 62 de l'élément d'accrochage 20, comportant une série de gorges 61 réparties à intervalles réguliers, de faire saillie hors du guide 58 suivant la distance déterminée "d" en abordant tangentiellement puis en engrenant avec la seconde roue 54 dentée, pour verrouiller l'élément d'accrochage 20 dans la position rétractée du câble 24, comme représenté à la figure 1. Le câble est guidé au droit du guide 58 par un anneau 63.

Dans cette configuration, un tronçon inférieur de la partie 62 est maintenu dans le guide 58 et un tronçon supérieur de la partie 62 munie de gorges 61 engrène avec la seconde roue dentée 54. La tête 26 en forme de champignon et la plaque 30 sont agencées à l'extrémité inférieure de la partie filetée 62.

Cette configuration est particulièrement avantageuse, car elle permet un verrouillage de l'élément d'accrochage 20 dans la position haute de la roue 16 de secours, ce qui permet de garantir un parfait maintien de la roue 16 dans son logement 14 en position rétractée du câble 24.

Comme l'illustre plus particulièrement la figure 1, le treuil 10 comporte une platine 64 de support qui comporte deux paliers portant l'axe commun "A" des roues dentées 46, 54 et de la poulie 48, qui porte le guide 58, et dont une plaque 66 est fixée au panneau horizontal inférieur 12 de la caisse du véhicule, notamment par vissage à l'aide de vis 65.

Selon un premier mode de réalisation de l'invention qui a été représenté aux figures 2 et 3, la plaque 66 de la platine de support 64 est une plaque supérieure qui est fixée sous le panneau 12 horizontal inférieur de la caisse du véhicule et la manivelle 40 traverse ledit panneau 12.

Selon un second mode de réalisation qui a été représenté à la figure 4, la plaque 66 de la platine 64 de support est une plaque inférieure qui est fixée sur le panneau horizontal inférieur 12 de la caisse agencé au fond du compartiment 13 à bagages du véhicule, et le guide 58 traverse ledit panneau 12.

Ainsi, comme l'illustre la figure 2, en position rétractée du câble 24, le câble 24 maintient la roue 16 par l'intermédiaire de la plaque 30. Lorsque l'on désire accéder à la roue 16, on tourne la manivelle pour faire descendre la roue 16 jusqu'au sol 36 dans la première position étendue du câble 24. Puis on tire la roue 16 derrière le véhicule et on décroche la tête 26 sertie dans la plaque 30 de la roue 16 et on refait passer l'élément 20 et la plaque 30 au travers de la roue 16. En procédant de manière inverse, on peut remonter la roue 16 dans le logement 14, et le verrouillage de la roue 16 est assuré par l'engrènement de la partie filetée 62 de l'élément 20 avec la seconde roue 54 en fin de course du câble 24.

L'invention propose donc un treuil 10 permettant de faciliter les manoeuvres de dépose et de rangement d'une roue 16 de secours d'un véhicule automobile. Cette configuration est particulièrement avantageuse dans le cas d'un véhicule de loisirs, d'un véhicule tout terrain, d'un véhicule utilitaire, ou de tout autre type de véhicule comportant une roue de secours 16 d'un poids et d'un encombrement élevés.

## Revendications

1. Véhicule automobile, du type qui comporte une caisse dont au moins un panneau (12) horizontal inférieur, notamment un panneau de fond d'un compartiment (13) à bagages, délimite sous le véhicule un logement (14) destiné à recevoir une roue (16) de secours du véhicule, du type dans lequel la roue (16) est fixée à un élément (20) d'accrochage qui est fixé à une première extrémité (22) d'un câble (24) qui est susceptible d'être actionné depuis l'intérieur de la caisse par l'intermédiaire d'un dispositif de manoeuvre (10) successivement entre une position rétractée dans laquelle il maintient la roue (16) de secours plaquée dans son logement (14) contre le panneau (12) horizontal inférieur, une première position intermédiaire étendue dans laquelle il permet l'extraction de la roue (16) de secours hors du logement (14) puis sa descente jusqu'au sol (36) sur lequel repose le véhicule, et une seconde position étendue dans laquelle le câble est déployé au maximum de manière que la roue puisse être tirée en arrière du véhicule sur le sol (36) pour son utilisation.
**caractérisé en ce que** le dispositif de manoeuvre est constitué d'un treuil (10) qui est susceptible de transformer un mouvement de rotation d'un organe (38) d'entrée du treuil (10) en un mouvement de translation du câble (24) selon un rapport de démultiplication qui est progressivement variable à mesure du déroulement du câble (24) entre une valeur réduite, associée à la position rétractée du câble (24), et une valeur élevée associée au moins à la première position étendue du câble (24).

2. Véhicule automobile selon la revendication précédente, **caractérisé en ce que** le treuil (10) comporte au moins, d'amont en aval, un arbre primaire (42), qui est solidaire en rotation de l'organe d'entrée (38), dont un filetage (42) sans fin engrène avec une première roue dentée (46) d'axe (A) horizontal qui est liée en rotation à une poulie (48) tronconique coaxiale qui comporte une gorge (50) en spirale dans laquelle est enroulé le câble (24), la poulie tronconique (48) étant accolée à la première roue (46) dentée par son extrémité (52) de plus grand diamètre et une seconde extrémité du câble étant fixé sur la périphérie de l'extrémité (52) de plus grand diamètre de la poulie (48), pour proposer le rapport de démultiplication variable à mesure du déroulement du câble (24).

3. Véhicule automobile selon la revendication précédente, **caractérisé en ce que** le treuil (10) comporte de surcroît :
- une seconde roue dentée (54) qui est liée en rotation à l'extrémité (56) de plus petit diamètre de la poulie tronconique (48),
- un guide (58) tubulaire vertical qui est agencé selon une direction (D) tangente à la seconde roue (54) dentée, dont une extrémité (60) est agencée verticalement à une distance (d) déterminée d'un axe (B) parallèle à l'axe (A) commun des roues (46, 54) et de la poulie (48) et tangent à la seconde roue dentée (54), et qui est destiné à permettre le passage du câble (24),
- une partie (62) de l'élément d'accrochage, comportant une série de gorges (61) réparties à intervalles réguliers, qui est susceptible de traverser le guide (58) dans la position rétractée du câble afin qu'un tronçon inférieur de la partie filetée (62) soit maintenu dans le guide et qu'un tronçon supérieur de la partie (62) munie de gorges (61) fasse saillie hors du guide (58) suivant la distance (d) déterminée en abordant tangentiellement puis en engrenant avec la seconde roue (54) dentée, pour verrouiller l'élément (20) d'accrochage dans la position rétractée du câble (24).

4. Véhicule automobile selon la revendication précédente, **caractérisé en ce que** le treuil (10) comporte une platine (64) de support qui comporte deux paliers portant l'axe (A) commun des roues dentées (46, 54) et de la poulie (48), qui porte le guide (58), et qui est fixée, notamment par vissage, au panneau (12) horizontal inférieur de la caisse du véhicule.

5. Véhicule automobile selon la revendication précédente, **caractérisé en ce que** la platine (64) de support est fixée sur le panneau (12) horizontal inférieur de la caisse du véhicule.

6. Véhicule automobile selon la revendication 4, **caractérisé en ce que** la platine (64) de support est fixée sous le panneau (12) horizontal inférieur de la caisse du véhicule

7. Véhicule automobile selon l'une quelconque des revendications précédentes, **caractérisé en ce que** le treuil (10) comporte un dispositif de limitation de couple qui est logé dans la poulie tronconique (48) et qui est interposé mécaniquement entre la première roue dentée (46) et la poulie (48) tronconique.

8. Véhicule automobile selon l'une quelconque des revendications précédentes, **caractérisé en ce que** l'extrémité libre de l'arbre primaire (42) comporte un embout (38) formant l'organe d'entrée qui est susceptible de coopérer avec une manivelle (40) amovible.

9. Véhicule automobile selon la revendication précédente, **caractérisé en ce que** la manivelle (40) est une manivelle (40) d'un cric (10) du véhicule.

10. Véhicule automobile selon la revendication 8, **caractérisé en ce que** la manivelle (40) est une manivelle spécifique associée au treuil (10).

11. Véhicule automobile selon l'une quelconque des revendications 9 ou 10, **caractérisé en ce que** la manivelle (40) est d'une longueur (L) destinée à permettre la manoeuvre de l'embout (38) sans ôter des bagages (41) du compartiment (13) à bagages.

12. Véhicule automobile selon l'une quelconque des revendications précédentes, **caractérisé en ce que** l'élément (20) d'accrochage est réalisé en deux parties et comporte :
- à l'extrémité inférieure de sa partie munie de gorges, une tête (26) en forme de champignon,
- une plaque (30) de maintien de la roue de secours, dans une boutonnière (28) de laquelle la tête (26) de l'élément (20) d'accrochage est sertie.

13. Véhicule automobile selon la revendication précédente, **caractérisé en ce que** la roue (16) de secours comporte un perçage central par lequel est introduit d'un côté la tête (26) de l'élément (20) d'accrochage et la plaque (30) de maintien, ladite plaque de maintien étant d'un encombrement supérieur au diamètre dudit perçage central de le roue (16) pour éviter le vol de la roue (16) de secours.
